# EUROPÄISCHE PATENTANMELDUNG

(11) **EP 2 781 171 A1**
(43) Veröffentlichungstag der Anmeldung: **24.09.2014**
(21) Anmeldenummer: 14000484.7
(22) Anmeldetag: 11.02.2014
(51) Int. Cl.: A47C 21/04, B61B 12/00, H05B 3/34, A47C 7/74

(54) **Heizmatte für Liftanlagen**

(30) Priorität: 19.03.2013 DE 202013002630 U
(71) Anmelder: Seibt, Ute, 6972 Fußach (AT)
(72) Erfinder: Seibt, Manfred, 6972 Fussach (AT)
(74) Vertreter: Riebling, Peter

(57) **Zusammenfassung**

Beschrieben wird ein beheizbares Sitzkissen (1) für ein Sitz- und/oder Rückenpolsters eines Seilbahnsessels (15), wobei das Sitzkissen (1) aus einem Überzugstoff (2) und einem flächigen, textilen Heizelement (3) besteht, wobei das Heizelement (3) innerhalb eines Ausschnittes (20) im Überzugstoff (2) angeordnet ist und in Kontakt mit der zu beförderten Person ist.

## Beschreibung

Die Erfindung betrifft eine Heizmatte aus Textilstoff für Liftanlagen nach dem Oberbegriff des Schutzanspruches 1.

Unterschiedliche Heizmatten sind bereits aus dem Stand der Technik bekannt, dies zeigt beispielsweise die Druckschrift DE 10 2010 036 313 A1. Hierbei ist eine Wärmedecke biegbar ausgebildet und kann entweder als Wärmeunterbett, Heizdecke oder Heizkissen eingesetzt werden. Der Heizdraht ist mit dem Gewirk verbunden und kann dadurch flächig seine Heizleistung erbringen. Die Wärmedecke ist jedoch nur für den häuslichen Gebrauch, d. h. nur im Innenbereich anzuwenden.

Mit der DE 33 29 282 A1 wird eine Heizdecke gezeigt, wobei die Heizdrähte über gemeinsame Stromanschlüsse an zwei Endabschnitten verbunden sind. Die Heizdrähte sind hierbei auf einer Oberfläche in einer nichtleitenden Faserbahn befestigt bzw. darin eingewebt. Nachteil bei der vorliegenden Druckschrift ist, dass diese nicht für den Außenbereich geeignet ist, weil durch die Feuchtigkeit leicht einen Kurzschluss verursacht wird.

Mit der DE 40 20 580 A1 wird ein elektrisches Flächenheizelement gezeigt, welches aus netzartigen Maschenwaren mit Heizleitern besteht und an den Enden mit Kontaktleitern verbunden ist. Auch hier besteht der Nachteil, dass das Heizelement nicht für den Außenbereich geeignet ist.

Die Druckschrift DE 22 08 118 zeigt eine Heizplatte für Boden- und Flächenheizungen. Mit den Figuren 1 bis 5 wird ein Aufbau der Heizplatte gezeigt. Die oberste Schicht ist der Fußbodenbelag. Danach folgt eine Deckschicht und anschließend ist eine Heizmatte. Nachteil bei der vorliegenden Druckschrift ist, dass die Heizmatte im mittleren Bereich der Anordnung ausgebildet ist und von entweder einer Deckschicht oder eine Sperrschicht überdeckt ist und damit eine hohe Heizleistung erforderlich ist, um die notwendige Wärme an den gewünschten Punkt zu bringen. Des Weiteren liegt keine Isolierung gegen Feuchtigkeit vor, wodurch ein Einsatz im Außenbericht nicht möglich ist.

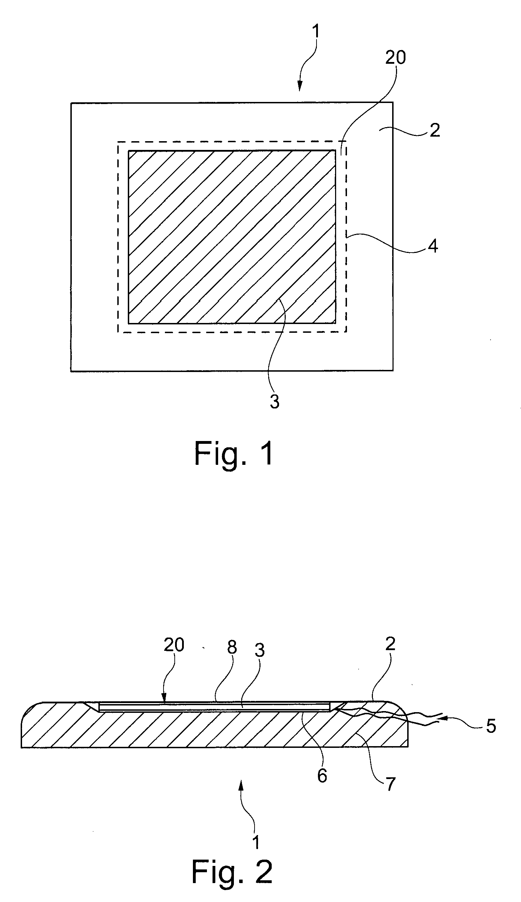

Mit der Gebrauchsmusterschrift AT 007477U1 wird ein Verfahren zum Beheizen des Sitzes- und/oder Rückenpolsters eines Sessels einer Seilbahnanlage und hierfür geeigneten Sessel gezeigt. Mit der Figur 2 wird ein Sitzpolster gezeigt, auf welchem ein Heizelement angeordnet ist, wobei beide Elemente unter einem Überzugsstoff angeordnet sind. Nachteil bei der vorliegenden Ausführungsform ist, dass das Heizelement durch den Überzugsstoff heizen muss und damit entweder eine hohe Energieleistung erforderlich ist oder eine schlechte Wärmeabgabe erfolgt. Bei der Überzugsschicht kann es sich um eine Sperrschicht handeln, die zwar wasserabweisend ausgebildet ist, jedoch die Heizleistung der Heizmatte müsste so stark sein, dass sie diese Sperrschicht überwindet, um an den gewünschten Kontaktbereich des Körpers zu gelangen.

Der Erfindung liegt daher die Aufgabe zugrunde, eine Heizmatte bei einem Seilbahnsessel derart weiterzubilden, dass sie einen geringen Strombedarf hat und in kurzen Ansprechzeiten ein Kissen einer Liftanlage derart beheizt, dass der zu transportierende Gast eine angenehme Wärme während der Transportfahrt erfährt.

Zur Lösung der gestellten Aufgabe ist die Erfindung durch die technische Lehre des Anspruches 1 gekennzeichnet.

Wesentliches Merkmal der Erfindung ist, dass das Heizelement (3) innerhalb eines Ausschnittes im Überzugstoff angeordnet ist und im direkten Kontakt mit dem zu beförderten Körper ist.

In einer vorteilhaften Ausführungsform ist das Heizelement derart mit dem Überzugsstoff verbunden, dass es eine durchgehende Oberfläche mit dem Überzugsstoff ausbildet. Das Heizelement tritt nun direkt mit dem zu wärmenden Körper in Kontakt. Eine unnötige Wärmeabgabe an eine zusätzliche Überzugsschicht wird dadurch verhindert.

Durch die vorteilhafte Ausführungsform des Heizelementes ist es nun erstmals ein schneller Aufheizvorgang möglich, weil das Heizelement im direkten Kontakt mit der zu heizenden Person ist.

Hierbei ist das Heizelement derart ausgebildet, dass es an seiner Oberfläche eine Beschichtung trägt, die beispielsweise aus Polyvinylchlorid (PVC) besteht.

Folgende Vorteile ergeben sich durch die PVC-Beschichtung an der Oberseite des Heizelementes:
- hochwertiger Korrosionsschutz im Innen- und Außenbereich.
- Die gummiartige Oberfläche schützt zuverlässig vor mechanischer Beschädigung.
- Hohe mechanische und chemische Beständigkeit.
- Hohe Zähigkeit.
- Sehr gute Witterungsbeständigkeit.

Trotz der PVC-Beschichtung an der Oberseite des Heizelementes ist eine gute Wärmeabgabe an den zu transportierenden Körper gegeben.

In einer weiteren vorteilhaften Ausführungsform ist an der Unterseite des Heizelementes eine zusätzliche Beschichtung aufgebracht, welche isolierend gegen Schwitzwasser bzw. Nässe wirkt. So ist das Heizelement zwar im direkten Kontakt mit der zu heizenden Person, jedoch können keine Witterungseinflüsse Schaden an dem Heizelement nehmen. Die zusätzliche Isolierschicht an der Unterseite des Heizelementes bietet damit einen Schutz gegen auftretende Nässe und Feuchtigkeit innerhalb des Sitzkissens.

Bevorzugt ist die untere Beschichtung bzw. die Isolierschicht des Heizelementes derart ausgebildet, dass eine geringe Wärmmenge an den Sesselkörper bzw. die Sitzplattform abgegeben wird und somit eine durchdringende Kälteeinwirkung von unten verhindert wird.

In einer weiteren vorteilhaften Ausführungsform wird das erfindungswesentliche Heizelement durch folgende Verfahrensschritte hergestellt:
1. Zuschnitt der Heizdraht- und Gewirkkombination auf ein gewünschtes Flächenmaß.
2. Beschichten der Unterseite des Heizelementes mit z. B. der Bedruckmethode, wobei zwei seitliche Randbereiche freigelassen werden, an welchen später die stromführenden Leisten befestigt werden.
3. Verbinden der Stromleiste mit dem Trägergewirk, wobei die Stromleiste beispielsweise mit einer Naht mit dem Trägergewirk verbunden wird.

Es ist darauf hinzu weisen, dass der Begriff Sitzkissen sämtliche Polster umfasst, welche bei einer Seilbahn im Rücken- und/oder Sitzbereich eingesetzt werden.

Des Weiteren ist bei einer Anordnung von mehreren Sitzkissen nebeneinander ein äußerst hoher Strombedarf notwendig, welcher nun durch den direkten Kontakt zwischen dem zu transportierenden Körper und frei zugänglichen Heizelement reduziert werden kann. Dies ist ein wesentlicher Unterschied gegenüber dem Stand der Technik, bei dem das Heizelement durch einen Überzug des Sitzkissens heizen musste, was zur Folge hatte, dass der Strombedarf exponentiell gestiegen ist.

Durch das neuartige Anbringen einer Isolierschicht auf der Unterseite des Heizelementes ist nun erstmals ein Schutz gegen Schwitzwasser gewährleistet.

Dies war aus dem Stand der Technik bisher nicht bekannt, denn hier waren die Heizelemente ungeschützt innerhalb eines nahezu dichten Sitzkissens angeordnet. Durch die Temperaturunterschiede zwischen der äußeren Oberfläche und dem Innenraum des Sitzkissens bildete sich Schwitzwasser, welches sich negativ auf die Heizelemente auswirkte.

Bei der vorliegenden Erfindung ist das Heizelement sowohl an seiner Oberseite als auch an seiner Unterseite isolierend ausgebildet. Durch die oberseitige Isolierung wird ein Schutz gegenüber den direkten Umwelteinflüssen gewährleistet. Durch die unterseitige Isolierung wird ein Schutz gegenüber Feuchtigkeitseinflüssen innerhalb des Sitzkissens gewährleistet.

Ein weiterer Vorteil der neuerungsgemäßen Ausführungsform ist, dass das Schaumteil mit einer Folie ummantelt ist und dadurch als Ganzes innerhalb des Sitzkissens angeordnet ist. Hierdurch entsteht der wesentliche Vorteil, dass bei einem Verrutschen des Schaumteils sich keine Falten bilden, sondern nahezu immer eine glatte Oberfläche in Bezug auf den Überzugsstoff gegeben ist.

Der Neuerungsgegenstand der vorliegenden Neuerung ergibt sich nicht nur aus dem Gegenstand der einzelnen Schutzansprüche, sondern auch aus der Kombination der einzelnen Schutzansprüche untereinander.

Alle in den Unterlagen, einschließlich der Zusammenfassung offenbarten Angaben und Merkmale, insbesondere die in den Zeichnungen dargestellte räumliche Ausbildung, werden als Neuerungswesentlich beansprucht, soweit sie einzeln oder in Kombination gegenüber dem Stand der Technik neu sind.

Im Folgenden wird die Neuerung anhand von lediglich einen Ausführungsweg darstellenden Zeichnungen näher erläutert. Hierbei gehen aus den Zeichnungen und ihrer Beschreibung weitere wesentliche Merkmale und Vorteile der Neuerung hervor.

Es zeigen:
- Figur 1:: Draufsicht des Sitzkissens, wobei im mittleren Bereich das Heizelement zu sehen ist
- Figur 2:: Seitenansicht des Sitzkissens mit der Anordnung des neuerungswesentlichen Heizelementes
- Figur 3:: Seitenansicht des neuerungswesentlichen Heizelementes
- Figur 4:: Perspektivische Ansicht eines Sesselliftes
- Figur 5:: Gebogene Ausbildung des Sitzkissens mit Anordnung des neuerungswesentlichen Heizelementes
- Figur 6:: Schematische Darstellung einer Anordnung einer Umlenkrolle einer Seilbahn
- Figur 7:: Unteransicht des neuerungswesentlichen Sitzkissens mit der Anordnung des Heizelementes

Mit der Figur 1 wird eine Draufsicht des neuerungswesentlichen Sitzkissens 1 gezeigt. Das Sitzkissen 1 besteht im Wesentlichen aus einem Überzugsstoff 2 und einem Heizelement 3.

Das Heizelement 3 ist innerhalb des Sitzkissens 1 angeordnet, wobei im Überzugsstoff 2 ein Ausschnitt 20 vorhanden ist, in welchem das Heizelement 3 eingelassen ist.

In einer vorteilhaften Ausführungsform ist das Heizelement 3 mit dem Sitzkissen 1 über eine umlaufende Naht 4 verbunden. Selbstverständlich sind sämtliche andere Verbindungsmethoden, wie z. B. ein Kleben oder ein Verschweißen, hier insbesondere ein Ultraschallschweißen möglich.

Das Heizelement 3 und der Überzugsstoff 2 des Sitzkissens 1 bilden eine nahezu ebene und durchgehende Oberfläche aus. Das Heizelement 3 ist mit seiner Oberfläche nun im direkten Kontakt mit der zu transportierenden Person. Der Überzugsstoff 2 dient an der Oberseite des Sitzkissens 1 als Randstoff, welcher umlaufend um das Heizelement 3 angeordnet ist. In einer vorteilhaften Weise besteht der Überzugsstoff 2 aus einem wasserabweisenden Material, wie z. B. einem Polyesterträgergewebe mit einer PVC-Beschichtung. Solche Oberflächen haben sich als vorteilhaft herausgebildet, weil gerade im Skiliftbereich mit einer sehr hohen Abnutzung der Oberfläche zu rechnen ist.

Entscheidend ist, dass die Oberseite des Heizelementes 3 nicht durch den Überzugstoff 2 überdeckt ist. In einer vorteilhaften Ausführungsform weist das Heizelement an seiner Oberfläche eine Beschichtung auf, welche wasserabweisend ist und ebenfalls den hohen Belastungen im z. B. Skiliftbereich standhält.

Vorteilhafterweise könnte die unterschiedliche Ausbildung des Heizelementes 3 im Mittenbereich des Sitzkissens 2 als Designapplikation genutzt werden und sich somit gegenüber dem anderen Überzugsstoff 2 unterscheiden. Dieser optische Vorteil kann genutzt werden, um der zu transportierenden Person den wärmenden Bereich des Sitzkissens 1 aufzuzeigen.

Wichtig ist nun, dass der Überzugsstoff 2 derart ausgeschnitten ist, dass das Heizelement 3 nahezu übergangslos innerhalb des Überzugsstoffes 2 angeordnet ist und mit diesem über eine umlaufende Naht 4 vernäht ist. Dadurch ist eine nahezu ebene auf dem Sitzkissenoberfläche 1 möglich, wobei das Heizelement 3 nun im direkten Kontakt mit der zu transportierenden Person ist.

Mit der Figur 2 wird eine Seitenansicht des neuerungswesentlichen Sitzkissens 1 gezeigt. Das Sitzkissen 1 ist hierbei so aufgebaut, dass innerhalb des Überzugsstoffes 2 ein nahezu rechteckförmiger Ausschnitt 20 vorhanden ist, in welchem das Heizelement 3 angeordnet ist. Das Heizelement 3 ist mit dem Überzugsstoff vorteilhafter Weise mit einer Naht 4 verbunden. Durch die Anordnung des Heizelementes 3 innerhalb des Sitzkissens 1 ist eine extrem dünne Ausführungsform möglich.

An der Oberfläche des Heizelementes 3 ist eine Beschichtung 8 angeordnet, welche den Witterungseinflüssen standhält. Im unteren Bereich des Heizelementes 3 ist ebenfalls eine Beschichtung 6 angeordnet, welche als Feuchtigkeitssperre dient.

Mit dieser vorteilhaften Ausführungsform ist es nun erstmals möglich, dass ein Heizelement 3 im direkten Kontakt mit der zu transportierenden Person steht und nicht wie im Stand der Technik bekannt, durch einen Überzug isolierend innerhalb eines Sitzkissens 1 angeordnet ist.

Mit der Figur 2 wird ferner ein Schaumteil 7 gezeigt, welches innerhalb des Überzugsstoffes 2 angeordnet ist und dämpfend für die transportierende Person gegenüber dem Sessel wirkt. Das Schaumteil 7 hat lediglich eine Komfortfunktion.

Das Heizelement 3 verfügt über einen Stromanschluss 5, durch welchen die notwendige Energieversorgung erfolgt. Der Stromanschluss 5 kann beliebig aus dem Sitzkissen 1 heraus geführt werden. Es wird jedoch eine untere bzw. seitliche Ausleitung bevorzugt.

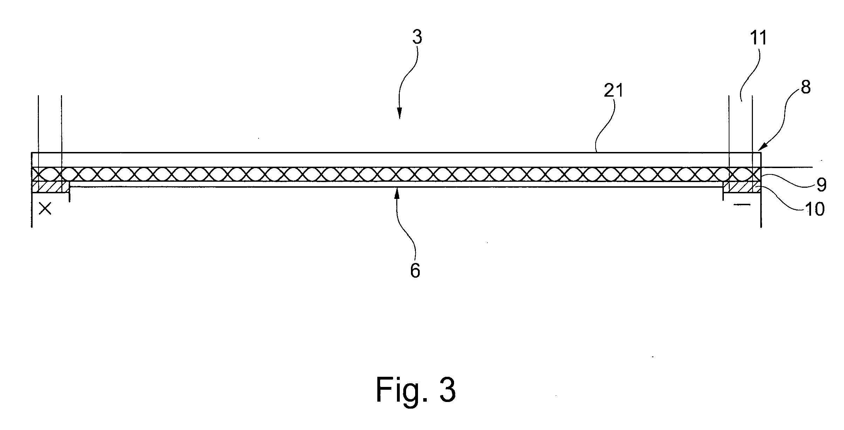

Mit der Figur 3 wird eine Seitenansicht des neuerungswesentlichen Heizelementes 3 gezeigt. Das Heizelement 3 besteht hierbei aus verschiedenen Schichten, wobei es derart ausgebildet ist, dass es ohne einen zusätzlichen Überzugstoff eingesetzt werden kann. Entscheidend bei der vorliegenden Neuerung ist daher, dass das Heizelement 3 nicht durch einen Überzug den Einsatzbereich eines Sitzheizkissens 1 für z.B. Liftanlagen erlangt, sondern das Heizelement 3 so ausgebildet ist, dass es für sich allein jederzeit im Freien betrieben werden kann. Dies wird insbesondere durch den verschiedenschichtigen Aufbau erreicht. Das Grundmodul für das neuerungswesentliche Heizelement 3 ist ein Trägergewirk 21, welches aus einem Gewirk und einem Heizdraht 9 gebildet ist. Entscheidend ist, dass das Trägergewirk 21 auf jede beliebige Größe zugeschnitten werden kann und anschließend als Heizelement 3 weiterverarbeitet werden kann.

Auf der Oberseite des Trägergewirkes 21 ist eine Beschichtung 8 angeordnet, welche in vorteilhafter Weise als PVC-Beschichtung ausgebildet ist. Es ist jedoch jede andere Beschichtung möglich, die den Witterungseinflüssen standhält und isolierend gegenüber Nässe wirkt. Die Beschichtung 8 ist hierbei mit dem Trägergewirk 21 fest verbunden und bildet eine Einheit aus. So wird beispielsweise beim Zuschnitt auf das gewünschte Flächenmass, das Trägergewirk 21 zusammen mit der Beschichtung 8, in einem Arbeitsgang erledigt.

Auf der Unterseite des Trägergewirkes 21 ist in einer vorteilhaften Ausführungsform eine Beschichtung 6 angeordnet. Die Beschichtung 6 erstreckt sich über nahezu die gesamte Fläche der Unterseite, wobei im äußeren Randbereich jeweils zwei schmale Streifen von der Isolierung 6 ausgelassen werden. In diesem äußeren Randbereich des Heizelementes 3 ist eine Kontaktleiste 10 angeordnet. Die Verbindung zwischen der Kontaktleiste 10 und dem Trägergewirk 21 erfolgt bevorzugt mit einer Naht 11. Es ist jedoch eine beliebig andere Verbindungsmethode möglich.

Durch die Naht 11 entsteht eine leitende Verbindung zwischen dem Heizdraht 9, welcher sich im Trägergewirk 21 befindet und der Kontaktleiste 10. Die Isolierschicht 6 stößt hierbei nahezu an die Kontaktleiste 10 an und kann damit eine gute Isolierung auf der Unterseite des Heizelementes bewirken. Damit ist es nun erstmals möglich, dass Heizelement als separates Teil innerhalb eines Sitzkissens anzuordnen, wobei dieses Heizelement für sich allein isolierend gegenüber äußeren Witterungseinflüssen ist.

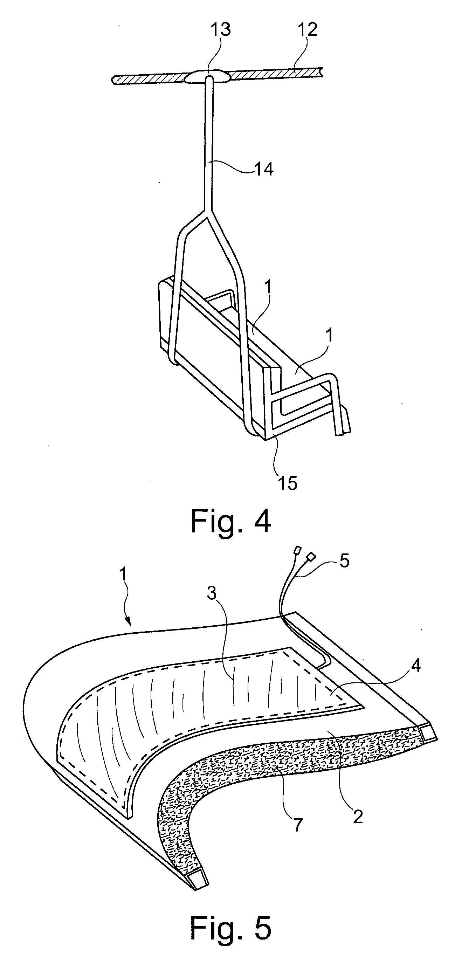

Mit der Figur 4 wird ein Sessellift 14 gezeigt, wobei dieser über eine Kopplungsvorrichtung 13 mit einem Seil 12 verbunden ist. Durch die Kopplungsvorrichtung 13 kann der Sessellift 14 mit dem Seil an- und abgekoppelt werden. Der Sessellift 14 weist im unteren Bereich einen Sessel 15 auf, welcher in der vorliegenden Ausführung Platz für zwei sitzende Personen bietet. Selbstverständlich gibt es auch andere Ausführungsformen mit mehr als zwei Sitzplätzen. So werden aktuell Sessellifte 14 mit Sitzplatzmöglichkeiten für 8 Personen betrieben. Entscheidend ist, dass das Sitzkissen 1 zusammen mit dem Heizelement 3 für beliebig viele Sitzplätze erweitert werden kann. Darüber hinaus ist eine Anordnung des neuerungswesentlichen Sitzkissens 1 ebenfalls in Innenraum eine Skigondel oder einen Bergbahn möglich.

In einer weiteren Ausführungsform kann das neuerungswesentliche Sitzkissen 1 für Bänke eingesetzt werden. Bei diesen Bänken handelt es sich um Sitz- bzw. Abstützmöglichkeiten, welche dem Ski- oder Snowboardfahrer eine sicheres Anschnallen des Board oder Verschließen der Bindung ermöglichen. Solche Bänke sind bevorzugt neben der Bergstation am Ausgangsbereich angeordnet.

Generell besteht die Möglichkeit das Sitzkissen 1 mit dem Heizelement 3 permanent zu beheizen oder nur für die Sitzdauer der jeweiligen Person. Bei einem teilweisen Betrieb weist das Sitzkissens 1 einen Kontaktfühler auf, welcher die sitzende Person erkennt und das Heizelement 3 aktiviert. Durch die kurze Aufheizzeit des Heizelementes 3 wird relativ schnell die benötigte Wäre an die sitzende Person abgegeben.

Wichtig bei der vorliegenden Neuerung ist, dass bei dem Herstellungsverfahren des Sitzkissens 1 das Heizelement 3 in unterschiedlichen Formen bzw. auf unterschiedliche Flächenmaße zugeschnitten werden kann. Durch das anschließende Herstellungsverfahren wird das Heizelement 3 isolierend ausgebildet. Dies war bisher nicht nach dem Stand der Technik möglich, da der Stand der Technik nur flächige Heizelemente vorsieht, welche keinerlei Isolierung gegenüber den Umwelteinflüssen bietet. So war es nach dem Stand der Technik nur möglich, ein Heizelement auf einem Sesselliftsitz anzuordnen und mit einer gesamten Überzugsfläche zu überziehen. Dies hat jedoch den wesentlichen Nachteil, dass das Heizelement durch den Überzug heizen muss und somit ein hoher Energiebedarf besteht.

Mit der Figur 5 wird eine perspektivische Anordnung des Sitzkissens 1 gezeigt. Entscheidend ist, dass das Sitzkissen 1 in sämtlichen Formen hergestellt werden kann. Selbstverständlich kann das Heizelement 3 biegbar ausgebildet sein und sich so den bestimmten Sitzformen anpassen.

Das Sitzkissen 1 nach Figur 5 ist gebogen ausgebildet, wobei sich das Heizelement 3 ausgehend von der Sitzfläche über eine Kante bis zum Beinbereich erstreckt.

Des Weiteren zeigt die Figur 5 den Stromanschluss 5, über welchen dem Heizelement der notwendige Strom zugeführt wird. Wesentlicher Vorteil ist, dass das Heizelement 3 über eine Naht 4 mit dem Überzugsstoff 2 verbunden ist. Der Übergang zwischen dem Überzugsstoff 2 und dem Heizelement ist so gering, dass die Oberfläche des Sitzkissens 1 nahezu eben ausgebildet ist. Der Benutzer eines Sesselliftes bzw. einer Seilbahn erfährt daher keinen Unterschied, ob er nun auf dem Überzugsstoff oder auf dem Heizelement sitzt.

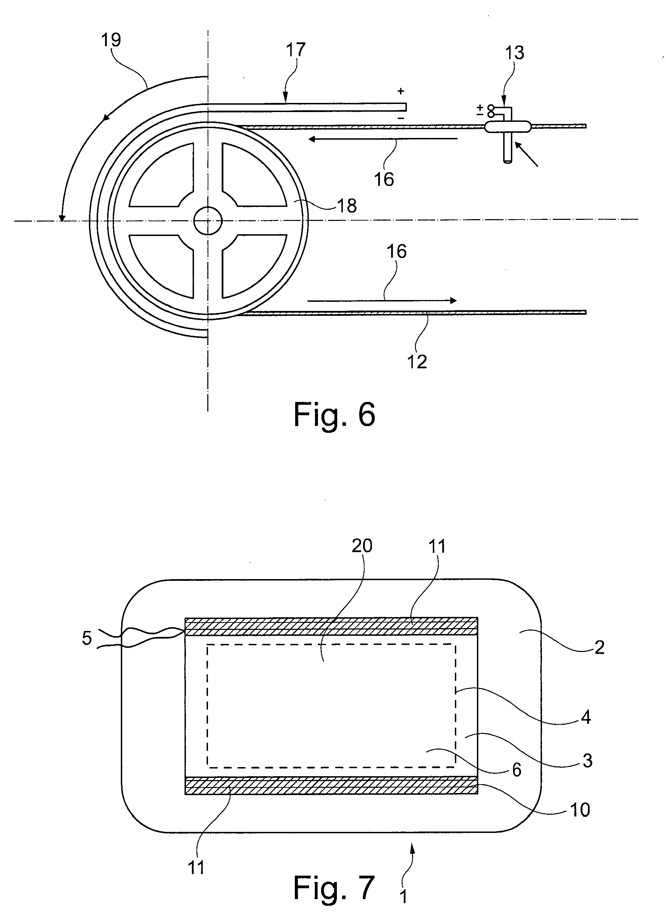

Mit der Figur 6 wird ein Umlenkrad 18 eine Sesselbahn gezeigt. Solche Sesselbahnen gehören zur Kategorie der Umlaufseilbahnen. An einem endlosen, dauernd umlaufenden Förderseil 12 sind in regelmäßigen Abständen Gehänge (Sessellifte) mit Sitzen für eine oder mehrere Personen befestigt.

Die vorliegende Neuerung kann sowohl bei fixgeklemmten, als auch bei kuppelbaren Sesselbahnen eingesetzt werden. In Folgenden soll die Ausführungsform nur anhand von einer kuppelbaren Variante erläutert werden. Selbstverständlich gilt dies auch für eine fixgeklemmte Variante, für die ebenfalls Schutz beansprucht wird.

Bei der Ausführungsform mit einer kuppelbaren Sesselbahn werden in den Stationen (Berg- und/oder Talstationen) die Sessel 15 vom Förderseil 12 gelöst. Die Koppelvorrichtungen 13 werden über enger oder weiter werdende Schienenkulissen, in die ein Betätigungshebel hineinläuft, in der Station automatisch geöffnet und geschlossen. Der Ein- und Ausstieg der Fahrgäste erfolgt dann bei stark reduzierter Geschwindigkeit.

In den Stationen verläuft das Seil 12 über Umlenkräder. Auf Höhe der Umlenkrolle 18 befindet sich eine Kontaktschiene 17, welche Stromführend ist. In einer bevorzugten Ausführungsform findet eine leitende Verbindung zwischen der Koppelvorrichtung 13 und der Kontaktschiene 17 statt. Fährt nun ein Sessellift 14 in die Station ein, findet ein Kontakt über die Kontaktschiene 17 statt, wodurch eine stromführende Verbindung zu dem Heizelement 3 hergestellt ist. Das Heizelement 3 befindet sich im Sitzkissenbereich des Sessels 15 und wird über die Stromanschlüsse 5 versorgt. Fließt nun Strom durch das Heizelement 3 wird das Sitzkissen 1 beheizt.

Entscheidend bei der vorteilhaften Ausführungsform ist, dass durch die Anordnung des Heizelementes im Oberflächenbereich des Überzugsstoffes 2 das Heizelement 3 eine lediglich kurze Aufheizzeit benötigt.

Folglich wird nur ein geringern Umdrehungswinkels benötigt, um das Heizelement 3 auf die erforderliche Wärme aufzuheizen. So kann beispielsweise eine ¼-Umdrehung, wie sie mit dem Weg 19 beschrieben ist, ausreichen, um das Heizelement 3 mit dem notwendigen Strom zu versorgen und damit die geforderte Wärmeleistung für die nächste Liftfahrt bereitzustellen.

Entscheidend ist, dass ausgehend von der Bewegungsrichtung 16 das Heizelement über die Kopplungsvorrichtung 13 mit einer Kontaktschiene 17 verbunden ist und nur über Weg benötigt, um seinen Strombedarf zu decken.

Mit der Figur 7 wird eine Unteransicht des neuerungswesentlichen Sitzkissens 1 gezeigt. Generell ist das Sitzkissen 1 an allen Seiten geschlossen und trägt in seinem Innenraum sowohl das Heizelement 3, als auch das Schaumteil 7.

Bei der vorliegenden Darstellung nach Figur 7 ist lediglich eine Unteransicht der Sitzfläche gezeigt. Das Sitzkissen 1 weist hierbei in vorteilhafter Weise einen Überzugsstoff 2 auf, in welchem ein Heizelement 3 angeordnet ist. Die Verbindung zwischen dem Überzugsstoff und dem Heizelement geschieht durch eine Naht 4, wobei jede beliebige andere Verbindungsmethode verwendet werden kann.

Das Heizelement 3 weist als unterste Lage eine Isolierschicht 6 auf, welche zwischen den beiden Randbereichen angeordnet ist. Die beiden Randbereiche weisen Kontaktleisten 10 auf, welche über eine Naht 11 mit den Heizdrähten 9 des Trägergewirkes 21 verbunden sind.

Wichtig ist nun, dass das neuerungswesentliche Heizelement 3 auch im unteren Bereich gegenüber Schwitzwasser bzw. äußeren Umwelteinflüssen isolierend abgedichtet ist und damit eine lange Lebensdauer erreicht wird.

Zusammenfassend ist zu sagen, dass gegenüber dem Stand der Technik nun ein Heizelement 3 vorliegt, das als separates isolierendes Teil ausgebildet ist und mit einem Überzugsstoff 2 verbunden ist. Die Anordnung erfolgt derart, dass das Heizelement 3 im direkten Kontakt mit der zu transportierenden Person ist und dadurch nur eine geringe Heizleistung gegenüber dem Stand der Technik benötigt. Durch den geringen Energiebedarf kann sich dies vorteilhaft auswirken, da nun im unteren Bereich einer Liftstation lediglich eine kurze Kontaktzeit notwendig ist, um das Heizelement 3 auf die geforderte Wärmeleistung aufzuheizen.

Durch den geringen Energiebedarf und die schnelle Aufheizzeit kann das Heizelement 3 auch mit anderen Energiequellen versorgt werden. So ist beispielsweise eine Solarmodul auf dem Dach der Sesselbahn möglich. Oder ein Akkumulator hält während der Fahrt die Energievorsorgung aufrecht.

### Zeichnungslegende

- 1: Sitzkissen
- 2: Überzugsstoff
- 3: Heizelement
- 4: Naht
- 5: Stromanschluss
- 6: Beschichtung
- 7: Schaumteil
- 8: Oberflächenbeschichtung
- 9: Heizdraht
- 10: Kontrollleiste
- 11: Naht für Kontaktleiste (10,21)
- 12: Seil
- 13: Koppelvorrichtung
- 14: Sessellift
- 15: Sessel
- 16: Bewegungsrichtung
- 17: Kontaktschiene
- 18: Umlenkrad
- 19: Weg
- 20: Ausschnitt
- 21: Trägergewirk (8, 9)

## Patentansprüche

1. Beheizbares Sitzkissen (1) für ein Sitz- und/oder Rückenpolsters eines Seilbahnsessels (15), wobei das Sitzkissen (1) aus einem Überzugstoff (2) und einem flächigen, textilen Heizelement (3) besteht, **dadurch gekennzeichnet, dass** das Heizelement (3) innerhalb eines Ausschnittes (20) im Überzugstoff (2) angeordnet ist und in Kontakt mit der zu beförderten Person ist.

2. Sitzkissen (1) nach Anspruch 1, **dadurch gekennzeichnet, dass** das Heizelement (3) ein Trägergewirk (21) mit einem Heizdraht (9) und an seiner Oberseite eine witterungsbeständige Beschichtung (6, 8) aufweist.

3. Sitzkissen (1) nach Anspruch 2, **dadurch gekennzeichnet, dass** die Beschichtung (8) aus PVC besteht.

4. Sitzkissen (1) nach einem der Ansprüche 1 bis 3, **dadurch gekennzeichnet, dass** das Heizelement (3) an seiner Unterseite eine witterungsbeständige Beschichtung (6) aufweist.

5. Sitzkissen (1) nach einem der Ansprüche 1 bis 4, **dadurch gekennzeichnet, dass** die witterungsbeständige Beschichtung (6) aufgedruckt ist.

6. Sitzkissen (1) nach einem der Ansprüche 1 bis 5, **dadurch gekennzeichnet, dass** das Heizelement (3) mit dem Überzugstoff (2) durch eine Naht (4) verbunden ist.

7. Sitzkissen (1) nach einem der Ansprüche 1 bis 6, **dadurch gekennzeichnet, dass** das Heizelement (3) im äußeren Randbereich mindestens eine Kontaktleiste (10) aufweist.

8. Sitzkissen (1) nach Anspruche 7, **dadurch gekennzeichnet, dass** die Kontaktleiste (10) mit dem Trägergewirk (21) mit einer Naht (11) verbunden ist.

9. Sitzkissen (1) nach einem der Ansprüche 1 bis 8, **dadurch gekennzeichnet, dass** das Sitzkissen (1) auf einem Sessel (15) angeordnet ist, welcher über eine Koppelvorrichtung (13) mit einem Seil (12) verbunden ist.

10. Sitzkissen (1) nach Anspruch 9, **dadurch gekennzeichnet, dass** die Stromversorgung für das Heizelement (3) über die Koppelvorrichtung (3) und eine stationsseitige Kontaktschiene (17) erfolgt.
